# EUROPÄISCHE PATENTANMELDUNG

(11) **EP 2 444 864 A1**
(43) Veröffentlichungstag der Anmeldung: **25.04.2012**
(21) Anmeldenummer: 10188547.3
(22) Anmeldetag: 22.10.2010
(51) Int. Cl.: G05B 15/02, G05B 23/02

(54) **Einrichtung und Verfahren zur Reduzierung des Energieverbrauchs einer Maschine aus der Automatisierungstechnik**

(71) Anmelder: SIEMENS AKTIENGESELLSCHAFT, 80333 München (DE)
(72) Erfinder: Geschwill, Michael, 91486, Uehlfeld (DE); Grözinger, Andreas, 71272, Renningen (DE)

(57) **Zusammenfassung**

Die Erfindung betrifft eine Einrichtung zur Reduzierung des Energieverbrauchs einer Maschine (8) aus der Automatisierungstechnik, wobei die Einrichtung (9) zur Anzeige von Energieprofilen (10a, 10b, 10c), die jeweilig aktivierbare Bedingungen (11a, 11b, 11c, 11d) aufweisen ausgebildet ist, wobei die Einrichtung (9) derart ausgebildet ist, dass die Bedingungen (11a, 11b, 11c, 11d) durch einen Bediener aktivierbar sind, wobei die Einrichtung (9) derart ausgebildet ist, dass die Einrichtung (9) die Erfüllung von aktivierten Bedingungen (11a, 11c, 11d) überwacht und im Falle der Erfüllung aller aktivierten Bedingungen (11a, 11c, 11d) eines Energieprofils (10a), entsprechend dem Energieprofil (10a) ein Zustandssignal (Z) erzeugt. Weiterhin betrifft die Erfindung ein diesbezügliches Verfahren. Die Erfindung ermöglicht den Energieverbrauch einer Maschine (8) aus der Automatisierungstechnik zu senken.

## Beschreibung

Die Erfindung betrifft eine Einrichtung und Verfahren zur Reduzierung des Energieverbrauchs einer Maschine aus der Automatisierungstechnik.

Maschinen aus der Automatisierungstechnik, wie z.B. Werkzeugmaschinen, Produktionsmaschinen und/oder Roboter, haben einen sehr hohen Energieverbrauch.

Aus der EP 2 149 828 A2 ist eine Vorrichtung und ein Verfahren zum Reduzieren des Energieverbrauchs einer Maschine oder Anlage bekannt.

Es ist Aufgabe der Erfindung, den Energieverbrauch einer Maschine aus der Automatisierungstechnik zu senken.

Diese Aufgabe wird gelöst durch eine Einrichtung zur Reduzierung des Energieverbrauchs einer Maschine aus der Automatisierungstechnik, wobei die Einrichtung zur Anzeige von Energieprofilen, die jeweilig aktivierbare Bedingungen aufweisen ausgebildet ist, wobei die Einrichtung derart ausgebildet ist, dass die Bedingungen durch einen Bediener aktivierbar sind, wobei die Einrichtung derart ausgebildet ist, dass die Einrichtung die Erfüllung von aktivierten Bedingungen überwacht und im Falle der Erfüllung aller aktivierten Bedingungen eines Energieprofils, entsprechend dem Energieprofil ein Zustandssignal erzeugt.

Weiterhin wird diese Aufgabe gelöst durch ein Verfahren zur Reduzierung des Energieverbrauchs einer Maschine aus der Automatisierungstechnik mittels Energieprofile, die jeweilig aktivierbare Bedingungen aufweisen, mit folgenden Verfahrensschritten:
- Einlesen der aktivierten Bedingungen der Energieprofile, und
- Überwachung der Erfüllung der aktivierten Bedingungen, wobei im Falle der Erfüllung aller aktivierten Bedingungen eines Energieprofils entsprechend dem Energieprofil ein Zustandssignal erzeugt wird.

Durch die Erfindung wird es einem Bediener der Maschine ermöglicht, auf einfache Art und Weise, individuell an seine Bedürfnisse angepasste Energieprofile einzurichten.

Vorteilhafte Ausbildungen der Erfindung ergeben sich aus den abhängigen Ansprüchen. Vorteilhafte Ausbildungen der Einrichtung ergeben sich analog zu vorteilhaften Ausbildungen des Verfahrens und umgekehrt.

Es erweist sich als vorteilhaft, wenn die Einrichtung ausgebildet ist, entsprechend dem Zustandssignal, die Abschaltung von mindestens einer energieverbrauchenden Komponente der Maschine zu bewirken, da durch die Abschaltung von einer energieverbrauchenden Komponente der Maschine eine hohe Reduzierung des Energieverbrauchs der Maschine realisiert werden kann.

Es erweist sich als vorteilhaft, wenn die Einrichtung eine Projektierungsschnittstelle aufweist, die zur Festlegung, welche energieverbrauchende Komponente oder energieverbrauchenden Komponenten der Maschine, entsprechend dem Zustandssignal, abgeschaltet werden, ausgebildet ist. Hierdurch wird es z.B. einem Hersteller der Maschine ermöglicht, auf einfache Art und Weise festzulegen, welche energieverbrauchenden Komponenten der Maschine, entsprechend dem Zustandssignal, abgeschaltet werden sollen.

Es erweist sich als vorteilhaft, wenn eine der aktivierbaren Bedingungen eines Energieprofils derart ausgebildet ist, dass diese erfüllt ist wenn die Zeitdauer, die alle übrigen aktivierten Bedingungen des entsprechenden Energieprofils unterbrechungsfrei erfüllt sind, mit einem Grenzwert übereinstimmt oder den Grenzwert überschreitet.

Die Maschine aus der Automatisierungstechnik kann dabei z.B. als Werkzeugmaschine, Produktionsmaschine und/oder als Roboter ausgebildet sein.

Weiterhin erweist sich ein Computerprogramm mit Programmcode zur Durchführung des erfindungsgemäßen Verfahrens, wenn das Computerprogramm auf einer Recheneinheit ausgeführt wird, als vorteilhaft.

Ein Ausführungsbeispiel der Erfindung ist in der Zeichnung dargestellt und wird im Folgenden näher erläutert. Dabei zeigen:
- FIG 1: eine Maschine aus der Automatisierungstechnik, welche die erfindungsgemäße Einrichtung zur Reduzierung des Energieverbrauchs der Maschine aufweist, und
- FIG 2: Energieprofile.

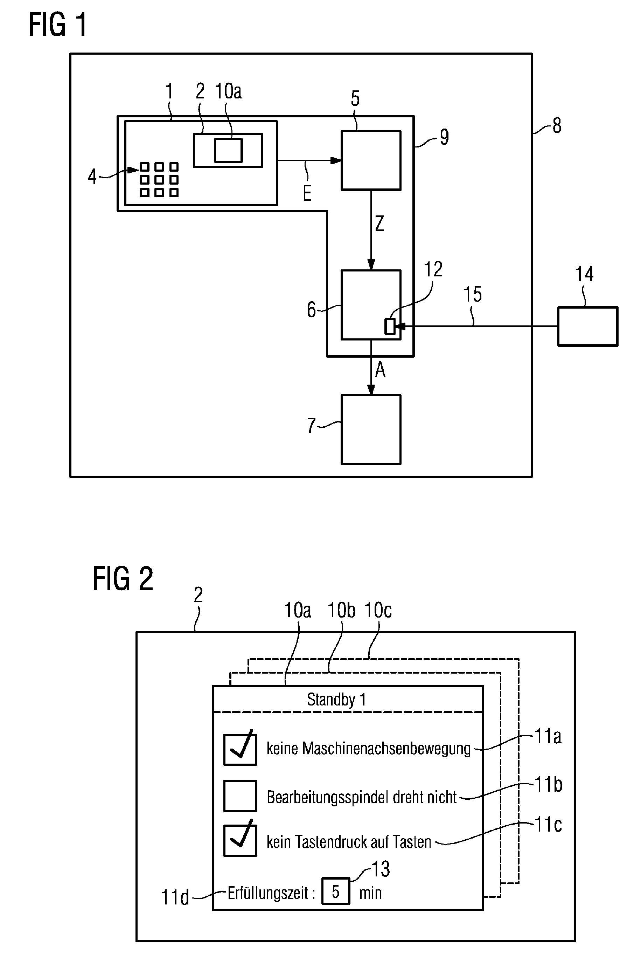

In FIG 1 ist in Form einer schematisierten blockförmigen Darstellung eine Maschine 8 aus der Automatisierungstechnik dargestellt, die eine erfindungsgemäße Einrichtung 9 zur Reduzierung des Energieverbrauchs der Maschine 8 aus der Automatisierungstechnik aufweist. Die erfindungsgemäße Einrichtung 9 liegt dabei im Rahmen des Ausführungsbeispiels in Form einer CNC-Steuerung (Computer Numerical Control) vor, wobei der Übersichtlichkeit halber in FIG 1 nur die zum Verständnis der Erfindung wesentlichen Elemente der CNC-Steuerung dargestellt sind. Die erfindungsgemäße Einrichtung 9 weist im Rahmen des Ausführungsbeispiels eine Bedieneinheit 1, eine Überwachungseinheit 5 und eine Abschalteeinheit 6 auf. Die Überwachungseinheit 5 und die Abschalteeinheit 6 liegen dabei in im Rahmen des Ausführungsbeispiels in Form von ausführbarem Softwarecode vor, welcher auf einem oder mehreren Prozessoren ausgeführt wird. Die Abschalteeinheit 6 kann z.B. in Form einer SPS (Speicherprogramierbare Steuerung) vorliegen. Die Bedieneinheit 1, die Überwachungseinheit 5 und die Abschalteeinheit 6 können baulich in verschiedenen Komponenten der Maschine oder aber auch in einer einzelnen Komponente der Maschine realisiert sein.

Im Rahmen des Ausführungsbeispiels ist die Maschine 8 als Werkzeugmaschine ausgebildet.

Die Bedieneinheit 1 dient zur Bedienung der Maschine 8. Die Bedienung der Maschine 8 wird dabei von einem Bediener ausgeführt. Die Bedieneinheit 1 weist einen Bildschirm 2 auf, auf dem z.B. Energieprofile 10a, 10b und 10c angezeigt werden können, wobei in FIG 1 gerade ein Energieprofil 10a auf dem Bildschirm 2 angezeigt wird. Weiterhin weist die Bedieneinheit 1 Eingabemittel auf, die im Rahmen des Ausführungsbeispiels in Form von Tasten 4 vorliegen. Über die Tasten 4 können vom Bediener Eingaben zur Bedienung der Maschine vorgenommen werden.

In FIG 2 sind der Bildschirm 2 und das Energieprofil 10a in Form einer schematisierten Ansicht vergrößert dargestellt. Dabei ist gestrichelt angedeutet, dass neben dem Energieprofil 10a auch noch weitere Energieprofile vorhanden sein können, die in FIG 2 mit den Bezugszeichen 10b und 10c versehen sind. Die Energieprofile weisen jeweils Bedingungen auf, wobei im Rahmen des Ausführungsbeispiels das Energieprofil 10a die Bedingung 11a "keine Maschinenachsenbewegung", die Bedingung 11b "Bearbeitungsspindel dreht nicht", die Bedingung 11c "kein Tastendruck auf Tasten" und die Bedingung 11d "Erfüllungszeit" aufweist. Die angezeigten Bedingungen eines Energieprofils können durch den Bediener mittels der Bedieneinheit 1 aktiviert werden, indem z.B. im Falle der Bedingungen 11a, 11b und 11c die Bedingungen mit Hilfe der Tasten 4 ausgewählt werden und z.B. durch einen entsprechenden Tastendruck auf aktiv geschaltet werden. Eine aktivierte Bedingung wird dabei im Falle der Bedingungen 11a, 11b und 11c, im Rahmen des Ausführungsbeispiels, durch einen Haken auf dem Bildschirm 2 angezeigt. Die Bedingung 11d "Erfüllungszeit" wird aktiviert, indem eine Zahl in ein dafür vorgesehenes Eingabefeld 13 eingegeben wird. Im Rahmen des Ausführungsbeispiels wurde die Zahl "5" eingeben und die Bedingung somit aktiviert. Jedem Energieprofil kann dabei auch ein Name vom Bediener zugewiesen werden, wobei im Rahmen des Ausführungsbeispiels das Energieprofil 10a den Namen "Standby 1" aufweist. Im Rahmen des Ausführungsbeispiels sind dabei, wie durch entsprechende Haken angezeigt, die Bedingung 11a und 11c aktiviert. Weiter ist auch die Bedingung 11d aktiviert. Die Bedingung 11b hingegen ist nicht aktiviert. Die Einrichtung 9 ist somit derart ausgebildet, dass die Bedingungen durch einen Bediener aktivierbar sind, d.h. die Einrichtung ist zur Aktivierung der Bedingungen durch einen Bediener ausgebildet. Mit Hilfe der Einrichtung 9 können wie oben beschrieben Energieprofile erstellt werden, so dass die Einrichtung zur Erstellung von Energieprofilen ausgebildet ist. Die aktivierten Bedingungen der Energieprofile werden von der Einrichtung 9 und insbesondere von der Bedieneinheit 1 eingelesen.

Weiterhin führt die Einrichtung 9 eine Überwachung der aktivierten Bedingungen der Energieprofile, wobei die Einrichtung 9 im Falle der Erfüllung aller aktivierten Bedingungen eines Energieprofils, entsprechend dem Energieprofil, ein Zustandssignal Z erzeugt. Hierzu werden die Energieprofile an eine Überwachungseinheit 5 von der Bedieneinheit 1 übermittelt, was durch einen Pfeil E in FIG 1 dargestellt ist. Die Überwachungseinheit 5 und damit die Einrichtung 9 überwacht bei jedem Energieprofil die Erfüllung der jeweiligen im Energieprofil aktivierten Bedingungen und erzeugt im Falle der Erfüllung aller aktivierten Bedingungen eines Energieprofils, entsprechend dem Energieprofil, ein Zustandssignal Z. Es wird somit für jedes Energieprofil ein dem Energieprofil zugehöriges Zustandssignal Z erzeugt. Entsprechend dem Zustandssignal Z wird von der Einrichtung 9 die Maschine 8 in einen dem Zustandssignal Z zugeordneten Energiesparmodus überführt. Jedem Energieprofil ist somit in der Regel ein Energiesparmodus zugeordnet.

Hierzu wird das Zustandssignal Z an eine Abschalteinheit 6 übermittelt. Die Abschalteinheit 6 bewirkt, entsprechend dem Zustandssignal Z, die Abschaltung von mindestens einer energieverbrauchenden Komponente 7 der Maschine 8. Die energieverbrauchenden Komponenten 7 der Maschine 8 können z.B. in Form der Antriebe der Maschine 8, in Form von Heizungen, Pumpen, und/oder Leuchtmitteln der Maschine vorliegen. Die Abschalteeinheit 6 erzeugt hierzu Abschaltesignale A, die eine Abschaltung der entsprechenden Energieverbrauchenden Komponenten der Maschine bewirken. Es sei an dieser Stelle angemerkt, dass z.B. die Bedieneinheit 1 und die Einrichtung 9 ebenfalls energieverbrauchende Komponenten der Maschine 8 darstellen und somit auch eine Abschaltung dieser Komponenten der Maschine über die Abschalteinheit 6 bewirkt werden kann.

Die Bedingung 11d ist erfüllt, wenn die Zeitdauer, die alle übrigen aktivierten Bedingungen des Energieprofils 10a, d.h. im Rahmen des Ausführungsbeispiels die Bedingungen 11a und 11c des Energieprofils 10a, unterbrechungsfrei erfüllt sind, mit einem zeitlichen Grenzwert übereinstimmt oder den Grenzwert überschreitet. Der Grenzwert ist im Rahmen des Ausführungsbeispiels beim Energieprofil 10a zu 5 Minuten festgelegt, d.h. im Falle des Energieprofils 10a wird, wenn über einen Zeitraum von 5 Minuten keine Maschinenachsbewegungen der Maschine 8 und kein Tastendruck auf die Tasten 4 der Bedieneinheit 1 stattgefunden haben, ein entsprechend dem Energieprofil 10a zugeordnetes Zustandssignal Z erzeugt und die Abschalteinheit 6 übermittelt. Die Abschalteinheit 6 erzeugt infolge zwei Abschaltsignale, wobei das erste Abschaltsignal z.B. ein Abschalten des Spänefördererantriebs der Maschine 8 bewirkt und das zweite Abschaltsignal eine Abschaltung einer im Arbeitsraum der Maschine angeordneten Leuchte bewirkt.

Im Rahmen des Ausführungsbeispiels weist die erfindungsgemäße Einrichtung 9, insbesondere die Abschalteeinheit 6, eine Projektierungsschnittstelle 12 auf, die zur Festlegung, welche energieverbrauchende Komponente oder energieverbrauchenden Komponenten der Maschine, entsprechend dem Zustandssignal, abgeschaltet werden, ausgebildet ist.

Mit Hilfe der Projektierungsschnittstelle 12 kann, z.B. von einem Hersteller der Maschine 8 festgelegt werden, bei welchem Abschaltsignal E, welche energieverbrauchenden Komponenten der Maschine abgeschaltet werden. Es kann somit mittels der Projektierungsschnittstelle 12 festgelegt werden, welche energieverbrauchenden Komponenten im Falle der Erfüllung aller aktivierten Bedingungen eines Energieprofils, entsprechend dem Energieprofil abgeschaltet werden. Die Projektierungsschnittstelle kann 12 dabei z.B. mittels einer externen Recheneinrichtung 14 (z.B. Personal Computer), d.h. einer Recheneinrichtung, die kein Bestandteil der Maschine 8 ist, projektiert werden indem in die Abschalteeinheit 6, mittels des externen Recheneinrichtung, 14 z.B. ein entsprechendes Programm, das die Abschaltung der energieverbrauchenden Komponenten der Maschine in Abhängigkeit des Zustandssignals E festlegt, integriert wird. In FIG 1 ist dies durch einen Pfeil 15 dargestellt.

Durch die Energieprofile kann die Maschine somit in unterschiedliche Energiesparmodi bis hin zu einer kompletten Abschaltung der Maschine überführt werden.

## Patentansprüche

1. Einrichtung zur Reduzierung des Energieverbrauchs einer Maschine (8) aus der Automatisierungstechnik, wobei die Einrichtung (9) zur Anzeige von Energieprofilen (10a,10b,10c), die jeweilig aktivierbare Bedingungen (11a, 11b, 11c, 11d) aufweisen ausgebildet ist, wobei die Einrichtung (9) derart ausgebildet ist, dass die Bedingungen (11a, 11b, 11c, 11d) durch einen Bediener aktivierbar sind, wobei die Einrichtung (9) derart ausgebildet ist, dass die Einrichtung (9) die Erfüllung von aktivierten Bedingungen (11a, 11c, 11d) überwacht und im Falle der Erfüllung aller aktivierten Bedingungen (11a, 11c, 11d) eines Energieprofils (10a), entsprechend dem Energieprofil (10a) ein Zustandssignal (Z) erzeugt.

2. Einrichtung nach Anspruch 1,
**dadurch gekennzeichnet, dass** die Einrichtung (9) ausgebildet ist, entsprechend dem Zustandssignal (Z), die Abschaltung von mindestens einer energieverbrauchenden Komponente der Maschine (8) zu bewirken.

3. Einrichtung nach Anspruch 2,
**dadurch gekennzeichnet, dass** die Einrichtung (9) eine Projektierungsschnittstelle (12) aufweist, die zur Festlegung, welche energieverbrauchende Komponente oder energieverbrauchenden Komponenten der Maschine, entsprechend dem Zustandssignal (Z), abgeschaltet werden, ausgebildet ist.

4. Einrichtung nach einem der vorhergehenden Ansprüche,
**dadurch gekennzeichnet, dass** eine der aktivierbaren Bedingungen (11a, 11b, 11c, 11d) eines Energieprofils (10a,10b,10c) derart ausgebildet ist, dass diese erfüllt ist wenn die Zeitdauer, die alle übrigen aktivierten Bedingungen (11a, 11c) des entsprechenden Energieprofils (10a) unterbrechungsfrei erfüllt sind, mit einem Grenzwert übereinstimmt oder den Grenzwert überschreitet.

5. Einrichtung nach einem der vorhergehenden Ansprüche,
**dadurch gekennzeichnet, dass** die Maschine (8) als Werkzeugmaschine, Produktionsmaschine und/oder als Roboter ausgebildet ist.

6. Maschine aus der Automatisierungstechnik, wobei die Maschine eine Einrichtung (9) nach einem der Ansprüche 1 bis 5 aufweist.

7. Verfahren zur Reduzierung des Energieverbrauchs einer Maschine aus der Automatisierungstechnik mittels Energieprofile (10a,10b,10c), die jeweilig aktivierbare Bedingungen (11a, 11b, 11c, 11d) aufweisen, mit folgenden Verfahrensschritten:
- Einlesen der aktivierten Bedingungen (11a, 11c, 11d) der Energieprofile (10a,10b,10c), und
- Überwachung der Erfüllung der aktivierten Bedingungen (11a, 11c, 11d), wobei im Falle der Erfüllung aller aktivierten Bedingungen (11a, 11c, 11d) eines Energieprofils (10a), entsprechend dem Energieprofil (10a) ein Zustandssignal (Z) erzeugt wird.

8. Computerprogramm mit Programmcode zur Durchführung des Verfahrens nach Anspruch 7, wenn das Computerprogramm auf einer Recheneinheit ausgeführt wird.
